# EUROPEAN PATENT APPLICATION

(11) **EP 4 043 343 A1**
(43) Date of publication of application: **17.08.2022**
(21) Application number: 19948813.1
(22) Date of filing: 08.10.2019
(51) Int. Cl.: B64C 27/08, B64C 29/00, B64C 39/02

(54) **FLYING VEHICLE**

(71) Applicant: A.L.I. Technologies Inc., Tokyo 105-0011 (JP)
(72) Inventor: ARAKAWA, Yasuhiro, Tokyo 105-0011 (JP); TAKAGI, Yutaka, Tokyo 105-0011 (JP); OBA, Takafumi, Tokyo 105-0011 (JP); SHIROTA, Takeru, Tokyo 105-0011 (JP); KOMATSU, Shuhei, Tokyo 105-0011 (JP)
(74) Representative: Ipside
(86) International application number: PCT/JP2019/039708
(87) International publication number: WO 2021/070261

(57) **Abstract**

To provide an aerial vehicle that can improve the driving feel and riding comfort of a rider. An aerial vehicle according to the present technology includes: a vehicle body extending in the front-rear direction; a saddle section provided on an upper side of the vehicle body; a motive power section provided on an underside of the vehicle body, at a position below the saddle section; and a rotary wing section which is provided at at least one of the front and rear of the motive power section, and which rotates by using the motive power section as a motive power source.

## Description

### Technical Field

The present disclosure relates to an aerial vehicle, and more particularly relates to an aerial vehicle which a rider can ride and which ascends from the ground and moves.

### Background Art

An aerial vehicle which is capable of ascending and moving with a rider on board can move without being subject to restrictions with respect to movement which a moving body such as a motorcycle that moves on land is subjected to in relation to other moving bodies when moving on land, and therefore, it is expected that such aerial vehicles will be realized as new means of transportation.

For example, Patent Literature 1 discloses technology relating to an aerial vehicle that is also referred to as a so-called "hoverbike" which, in a state in which a rider is on board, ascends to a height of about 50 cm to 100 cm from the ground and moves by means of rotation of propellers.

### Citation List

### Patent Literature

Patent Literature 1: Japanese Patent Laid-Open No. 2019-14396

### Summary of Invention

### Technical Problem

When a rider drives such an aerial vehicle, there is a need to improve the rider's driving feel and riding comfort which are technical features that an aerial vehicle should have. In the technology disclosed in Patent Literature 1, because heavy objects are provided in a dispersed manner at the front and rear of the rider, there is room for improvement from the viewpoint of attitude control.

An object of the present technology, which has been made in view of the circumstances described above, is to provide an aerial vehicle which can improve a driving feel and riding comfort.

### Solution to Problem

An aerial vehicle according to the present disclosure for achieving the aforementioned object includes: a vehicle body extending in a front-rear direction; a saddle section provided on an upper side of the vehicle body; a motive power section provided on an underside of the vehicle body, at a position below the saddle section; and a rotary wing section which is provided at at least one of the front and rear of the motive power section, and which rotates by using the motive power section as a motive power source.

### Advantageous Effect of Invention

According to the technology of the present disclosure, the driving feel and riding comfort of a rider can be improved.

### Brief Description of Drawings

[Figure 1] Figure 1 is an oblique perspective view illustrating a configuration example of an aerial vehicle according to one embodiment of the present disclosure.
[Figure 2] Figure 2 is a side perspective view illustrating a configuration example of the aerial vehicle according to the embodiment illustrated in Figure 1.
[Figure 3] Figure 3 is a block diagram illustrating a hardware configuration example of the aerial vehicle according to the embodiment illustrated in Figure 1.

### Description of Embodiment

Hereunder, a preferred embodiment of the present disclosure is described in detail while referring to the accompanying drawings. Note that, in the present description and the accompanying drawings, constituent elements having substantially the same functional configuration are denoted by the same reference characters and a duplicate description thereof is omitted.

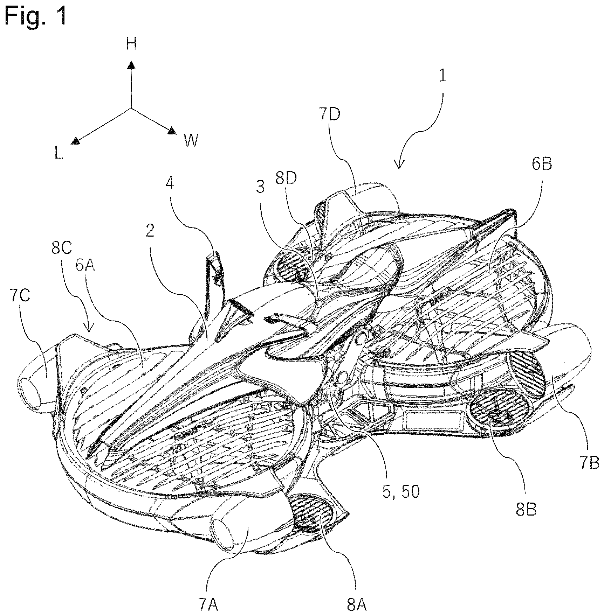

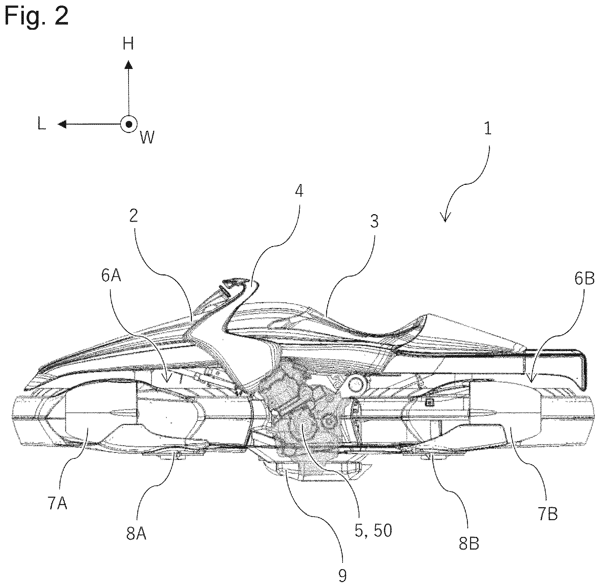

Figure 1 and Figure 2 are an oblique perspective view and a side perspective view illustrating a configuration example of an aerial vehicle 1 according to one embodiment of the present disclosure. As illustrated in Figure 1 and Figure 2, the aerial vehicle 1 is means of transportation that is also referred to as a so-called "hoverbike" which a rider can ride and which is capable of ascending to a height of about 50 cm to 100 cm from the ground and moving in the horizontal direction. Note that, with regard to the respective coordinate axes in the respective drawings, reference character L denotes the front-rear direction (front side is primary) of the aerial vehicle 1 (vehicle body 2), reference character W denotes the width direction of the aerial vehicle 1 (vehicle body 2) (left direction is primary), and reference character H denotes the vertical direction (upper side is primary) of the aerial vehicle 1 (vehicle body 2).

The aerial vehicle 1 includes a vehicle body 2, a saddle section 3, a grip section 4, an engine 50 that is an example of a motive power section 5, first rotary wing sections 6 (6A and 6B), second rotary wing sections 7 (7A to 7D), third rotary wing sections 8 (8A to 8D), and an exhaust system 9. Note that, the first rotary wing sections 6, the second rotary wing sections 7 and the third rotary wing sections 8 are an example of a rotary wing section. Further, the aerial vehicle 1 can include other constituent elements, and such constituent elements will be described later.

The vehicle body 2 is formed to extend in a front-rear direction L at the upper part of the aerial vehicle 1. The vehicle body 2 can be formed of, for example, a material having a relatively low specific gravity and high strength such as a carbon fiber reinforced polymer, a glass fiber reinforced polymer, aluminum, an aluminum alloy, a titanium alloy or a magnesium alloy.

The saddle section 3 and the grip section 4 are provided on the upper side at a central part in the front-rear direction L of the vehicle body 2.

The saddle section 3 corresponds to a seat which the rider straddles the vehicle body 2 of the aerial vehicle 1 to sit on.

The grip section 4 is provided for the rider who has straddled the saddle section 3 to hold on to. An operation section or interface or the like for use by the rider to operate the aerial vehicle 1 may be provided in the grip section 4. Further, although the grip section 4 is fixed to the vehicle body 2, the grip section 4 may be provided so as to be relatively movable with respect to the vehicle body 2, or may be provided so as to be immovable (that is, in a completely fixed state). The grip section 4, for example, may be movable with respect to the vehicle body 2 like a steering wheel for which a direction along a height direction H is the rotation axis, or may be an object like a lever which is movable in a direction along the front-rear direction L with respect to the vehicle body 2. An operation section such as buttons, levers, a steering wheel or the like may be provided in the grip section 4, and an input signal that is input to the operation section can be sent to a control section 10 to be described later.

The engine 50 that is an example of the motive power section 5 is provided on the underside of the vehicle body 2, at a position below the saddle section 3. Note that, the engine 50 illustrated in Figure 2 may actually be only partially visible from outside the vehicle body 2 in some cases, and is displayed in Figure 2 so as to be entirely visible in side view to illustrate the positional relationship in the present description. A gasoline engine, a diesel engine, a gas engine or the like may be mentioned as examples of the engine 50, and the mechanism of the engine 50 is not particularly limited.

The first rotary wing sections 6 are an example of lift generating wing sections that generate lift for causing the vehicle body 2 to ascend. The first rotary wing sections 6A and 6B are provided in a pair at the front and rear of the motive power section 5. In the example illustrated in Figure 1 and Figure 2, at the front and rear of the motive power section 5, the first rotary wing sections 6A and 6B are provided below tapered frames which constitute the front and rear of the vehicle body 2. The shape of these frames allows the first rotary wing sections 6 to smoothly take in a large amount of gas.

The first rotary wing sections 6 each include a propeller for generating lift, and a duct that houses the propeller and has vents at the upper and lower ends thereof. The propellers are, for example, so-called "contra-rotating propellers" in which a pair of blades that are arranged one on top of the other in the vertical direction rotate in opposite directions to each other. Rotation of the propellers causes an air flow to be generated from above to below. Lift is generated at the vehicle body 2 by the air flow, and the vehicle body 2 can be caused to ascend. Note that, although the first rotary wing section 6 according to the present embodiment is provided at the front and rear, respectively, of the vehicle body 2, the first rotary wing section 6 may be provided at least at one of the front and rear. By tilting the vehicle body 2 in a pitch direction (rotation direction that takes a width direction W as the rotation axis) or the roll direction (rotation direction that takes a front-rear direction L as the rotation axis) or tilting the first rotary wing sections 6, thrust in the horizontal direction is generated by the first rotary wing sections 6. By this means, the aerial vehicle 1 can be propelled.

Further, louvers may be provided in at least one of (the upper end side is preferable) the vents at the upper and lower ends of the duct of each of the first rotary wing sections 6. For example, as illustrated in Figure 1, the louvers have a strip shape and are arranged in the width direction, and may be provided so as to incline downward from the outer side to the center side with the front-rear direction L as the central axis. By means of such louvers, the entry of foreign objects into the duct can be suppressed. Further, by providing louvers, in a case where an object flies out from the inside of the duct also, the louvers can serve as an obstacle to the object flying out from the duct. In addition, the louvers can regulate the flow of gas that flows in from above. Further, providing the louvers makes it difficult for the rider who is riding the aerial vehicle 1 to see the propellers, and hence a sensation of fear of the rider can be alleviated.

Further, a variable flap mechanism may be provided at one part of the ducts of the first rotary wing sections 6. The flow amount and/or flow direction of gas that flows in or flows out can be controlled by such a flap mechanism. By this means, control of the flight of the aerial vehicle 1 can be performed more precisely.

The second rotary wing sections 7 are an example of thrust generating wing sections for imparting thrust to the vehicle body 2. In particular, the second rotary wing sections 7 can mainly impart thrust to the vehicle body 2 in the front-rear direction of the vehicle body 2. The second rotary wing section 7A is provided on the front left side of the vehicle body 2, the second rotary wing section 7B is provided on the rear left side of the vehicle body 2, the second rotary wing section 7C is provided on the front right side of the vehicle body 2, and the second rotary wing section 7D is provided on the rear right side of the vehicle body 2. The second rotary wing sections 7A, 7B, 7C and 7D are arranged on the outer side in the width direction of the first rotary wing sections 6, at the front and rear of the vehicle body 2.

Each of the second rotary wing sections 7 includes a duct that causes gas to circulate in the front-rear direction of the vehicle body 2, and a propeller that generates thrust inside the duct. A circulation port is provided at each end in the front-rear direction of the duct. The propeller may be, for example, a contra-rotating propeller, or may be a single propeller. Further, the rotation direction or the pitch angle of the propeller may be appropriately changed by the control section 10 or a motor driver 13 that are described later or the like. By this means, the second rotary wing sections 7 can generate thrust along at least one direction with respect to the front and rear directions of the vehicle body 2. Note that, although normally the second rotary wing sections 7 generate thrust in the forward direction of the vehicle body 2, the second rotary wing sections 7 may generate thrust in the rearward direction. The second rotary wing sections 7 are used, for example, to change the speed of the aerial vehicle 1, and to perform control that causes the aerial vehicle 1 to rotate around a yaw axis (axis in the direction along a vertical direction H).

The third rotary wing sections 8 are an example of thrust generating wing sections for imparting thrust to the vehicle body 2. In particular, the third rotary wing sections 8 can mainly impart thrust to the vehicle body 2 in the vertical direction of the vehicle body 2. The third rotary wing section 8A is provided on the front left side of the vehicle body 2, the third rotary wing section 8B is provided on the rear left side of the vehicle body 2, the third rotary wing section 8C is provided on the front right side of the vehicle body 2, and the third rotary wing section 8D is provided on the rear right side of the vehicle body 2. The third rotary wing sections 8A, 8B, 8C and 8D are arranged on the outer side in the width direction of the first rotary wing sections 6, at the front and rear of the vehicle body 2.

Each of the third rotary wing sections 8 includes a casing that causes gas to circulate in the vertical direction of the vehicle body 2, and a propeller that generates thrust inside the casing. The casing is provided with a circulation port at each of an upper end part and a lower end part thereof. The propeller may be, for example, a contra-rotating propeller, or may be a single propeller. Further, the rotation direction or the pitch angle of the propeller may be appropriately changed by the control section 10 or a motor driver 13 that are described later or the like. By this means, the third rotary wing sections 8 can generate thrust along at least one direction among the upward direction and downward direction of the vehicle body 2. Note that, although normally the third rotary wing sections 8 generate thrust in the upward direction of the vehicle body 2, the third rotary wing sections 8 may generate thrust in the downward direction. The third rotary wing sections 8, for example, are used to play an auxiliary role during ascent by means of the first rotary wing sections 6 of the aerial vehicle 1, and are used to control the attitude of the aerial vehicle 1 and to perform control that causes the aerial vehicle 1 to rotate around a pitch axis (axis in the direction along the width direction W) and/or around a roll axis (axis in the direction along the front-rear direction L).

The exhaust system 9 is a system that processes exhaust gas discharged from the engine 50. For example, a known exhaust device or the like can be used as the exhaust system 9. The exhaust system 9 is provided below the saddle section 3. In the example illustrated in Figure 2, the exhaust system 9 is provided underneath the engine 50.

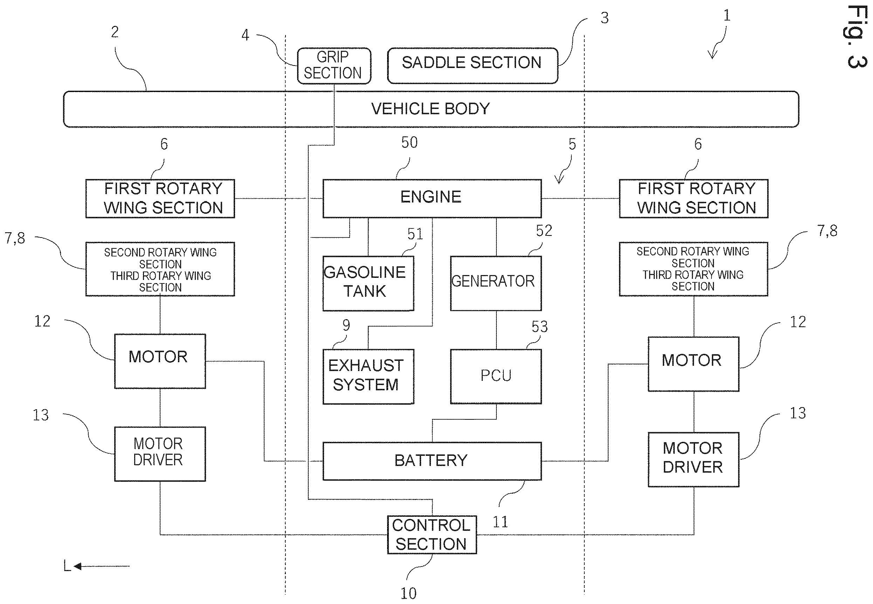

Next, the constituent elements of the aerial vehicle 1 will be described in more detail using Figure 3. Figure 3 is a block diagram illustrating a hardware configuration example of the aerial vehicle 1 according to the present embodiment. Note that, a description of constituent elements which have already been described above will be omitted here. Further, the dashed lines shown in Figure 3 are virtual boundary lines that define a front part, a central portion, and a rear part of the aerial vehicle 1 (the vehicle body 2). That is, the region in which the saddle section 3 is provided corresponds to the central part of the vehicle body 2. Further, an arrow L shown in Figure 3 is an arrow indicating the forward direction of the vehicle body 2.

As illustrated in Figure 3, in the central part of the vehicle body 2 are provided the saddle section 3, the grip section 4, and the motive power section 5, and in addition, the exhaust system 9, the control section 10, and a battery 11 can also be provided in the central part.

The motive power section 5 may also include a gasoline tank 51, a generator 52, and a PCU (power control unit) 53, in addition to the engine 50. The gasoline tank 51 stores gasoline to be supplied to the engine 50. The generator 52 has a function of generating electric power by means of motive power obtained using the engine 50 as a motive power source. The generator 52 is controlled by the PCU 53, and the generated electric power is stored in the battery 11. The PCU 53 has a function of performing management of the electric power in the battery 11.

In addition to the first rotary wing sections 6, the second rotary wing sections 7 and the third rotary wing sections 8, a motor 12 and a motor driver 13 are provided for each of the second rotary wing sections 7 and the third rotary wing sections 8 in the front part and the rear part of the vehicle body 2.

In the present embodiment, motive power generated by the engine 50 is transmitted to the first rotary wing sections 6 via a power shaft (not shown) or the like. On the other hand, motive power is transmitted to the second rotary wing sections 7 and the third rotary wing sections 8 directly through a power shaft or the like from the motor 12 provided for each of the second rotary wing sections 7 and the third rotary wing sections 8.

Note that, although in the present embodiment a configuration is adopted in which the motors 12 are provided in a form in which the motors 12 are attached to the second rotary wing sections 7 and the third rotary wing sections 8, respectively, the present technology is not limited to this example. For example, the motor 12 may be provided underneath the saddle section 3 in the central part of the vehicle body 2. In this case, the motor 12 is an example of the motive power section 5. The number of motors 12 is not particularly limited, and for example the motors 12 may be provided in a number that corresponds to the number of the second rotary wing sections 7 and third rotary wing sections 8.

The control section 10 has a processor, a memory, sensors and the like. The processor is constituted by a CPU (central processing unit) or a GPU (graphics processing unit) or the like, and controls the operation of each constituent element of the aerial vehicle 1, and performs control of sending and receiving of data between constituent elements, and processing required for execution of a program and the like.

The memory is constituted by a main storage device constituted by a volatile storage device such as a DRAM (dynamic random access memory), and an auxiliary storage device constituted by a nonvolatile storage device such as a flash memory or a HDD (hard disk drive). The memory is used as a work area of the processor, while on the other hand, various kinds of settings information and the like such as logic, codes or program instructions which can be executed by the control section 10 are stored in the memory.

In the present embodiment, the sensors are constituted by various kinds of sensors such as a weight sensor, a force sensor, inertial sensors (an acceleration sensor, a gyro sensor), a GPS sensor that receives radio waves from a GPS satellite, a proximity sensor, an optical or ultrasonic ranging sensor, a vision/image sensor (camera), an air pressure sensor that measures atmospheric pressure, and a temperature sensor that measures temperature.

The control section 10, for example, controls the output of the engine 50 and the motors 12 based on an input signal obtained from the operation section provided in the grip section 4, or a signal obtained from a sensor. By this means, the speed of rotation and the like of each rotary wing section are controlled, and ascent or flight of the aerial vehicle 1 is performed. Note that, a position at which the control section 10 is provided is not limited to the central part or the like of the vehicle body 2.

As illustrated in Figure 3, the motive power section 5 is provided on the underside of the saddle section 3 of the vehicle body 2. Since the saddle section 3 is installed at the central part of the vehicle body 2, the motive power section 5 is provided at the central lower part of the vehicle body 2. The motive power section 5 may be composed of heavy objects such as the engine 50, the motors 12, the generator 52, and the battery 11. Therefore, by providing the motive power section 5 composed of these objects at the central lower part of the vehicle body 2 (that is, on the underside of the saddle section 3), the center of gravity of the aerial vehicle 1 can be positioned at a position which is at the center and is at a lower part of the vehicle body 2. This configuration makes it possible to increase the stability with respect to the attitude and rotational motion and the like when driving the aerial vehicle 1. Hence, changes in the vehicle body balance which are not intended by the rider when driving are reduced, and thus the driving feel and riding comfort of the rider can be improved.

Further, in a case where the engine 50 is mounted, because the exhaust system 9 is also provided on the underside of the saddle section 3, heavy objects can be concentrated in the central lower part of the vehicle body 2, and the stability during driving can be increased.

Further, by concentrating relatively large and heavy constituent elements such as the motive power section 5 on the underside of the saddle section 3, the layout with respect to other portions of the vehicle body 2 can be freely designed. That is, the vehicle body 2 can be made compact and the degree of design freedom can be increased.

In addition, the motors 12 may be provided as an accessory in the second rotary wing sections 7 and/or the third rotary wing sections 8. In this case, by providing the motors 12, which have a small size compared to other constituent elements of the motive power section 5, at the front and rear of the vehicle body 2, it is possible to bring together the larger constituent elements of the motive power section 5 in the space at the central lower part of the vehicle body 2.

Further, even in a case where, in another embodiment, the aerial vehicle 1 includes a motive power section 5 in which an internal combustion engine such as the engine 50 is not mounted, by providing the battery 11 at the central lower part of the vehicle body 2, the center of gravity of the aerial vehicle 1 can be positioned at a position which is at the center and is at a lower part of the vehicle body 2. By this means, the stability during driving can be increased.

Whilst a preferred embodiment of the present disclosure has been described in detail above with reference to the accompanying drawings, the technical scope of the present disclosure is not limited to the above examples. It is clear that a person having common knowledge in the field of the art to which the present disclosure pertains will be able to contrive various examples of changes and modifications within the category of the technical idea described in the appended claims, and it should be understood that they also naturally belong to the technical scope of the present disclosure.

For example, although in the foregoing embodiment a configuration is adopted in which lift generating wing sections (first rotary wing sections 6) that generate lift for causing the vehicle body 2 to ascend, and thrust generating wing sections (second rotary wing sections 7, and third rotary wing sections 8) for imparting thrust to the vehicle body 2 are provided as rotary wing sections, the present technology is not limited to this example. For example, as wing sections that generate thrust, only the second rotary wing sections 7 as illustrated in the foregoing embodiment may be provided or only the third rotary wing sections 8 may be provided. Further, a configuration may be adopted in which only one among the lift generating wing sections and the thrust generating wing sections is provided. In a case where only one among the lift generating wing sections and the thrust generating wing sections is provided, alternative means for generating the other force can be appropriately adopted. Further, with respect to the motive power sections also, a configuration may be adopted in which only either one of the engine and the motor is provided.

Furthermore, the effects described herein are merely illustrative and exemplary, and not limiting. That is, the technology according to the present disclosure can exert other effects that are apparent to those skilled in the art from the description herein, in addition to the above-described effects or in place of the above-described effects.

Note that the following configurations also belong to the technical scope of the present disclosure.

### (Item 1)

An aerial vehicle, including:
a vehicle body extending in a front-rear direction;
a saddle section provided on an upper side of the vehicle body;
a motive power section provided on an underside of the vehicle body, at a position below the saddle section; and
a rotary wing section which is provided at at least one of the front and rear of the motive power section, and which rotates by using the motive power section as a motive power source.

### (Item 2)

The aerial vehicle according to Item 1, wherein:
the rotary wing section is provided in at least one pair at the front and rear of the motive power section; and
the saddle section is provided between a pair of the rotary wing sections in a front-rear direction.

### (Item 3)

The aerial vehicle according to Item 1 or Item 2, wherein:
a motor that rotates the rotary wing section is provided as an accessory in the rotary wing section; and
the motor obtains motive power by means of the motive power source.

### (Item 4)

The aerial vehicle according to any one of Items 1 to 3, wherein:
the motive power section includes a battery that electrically stores the motive power source; and
the battery is provided below the saddle section.

### (Item 5)

The aerial vehicle according to any one of Items 1 to 4, wherein:
the motive power section includes an engine.

### (Item 6)

The aerial vehicle according to Item 5, wherein:
an exhaust system that processes exhaust gas discharged from the engine is provided below the saddle section.

### (Item 7)

The aerial vehicle according to any one of Items 1 to 6, wherein:
the rotary wing section includes:
a lift generating wing section that generates lift for causing the vehicle body to ascend; and
a thrust generating wing section for imparting thrust to the vehicle body.

### (Item 8)

The aerial vehicle according to Item 7, wherein:
the thrust generating wing section is provided adjacent to an outer side in a width direction of the lift generating wing section.

### Reference Signs List

- 1: Aerial Vehicle
- 2: Vehicle Body
- 3: Saddle Section
- 4: Grip Section
- 5: Motive Power Section
- 6: First Rotary Wing Section
- 7: Second Rotary Wing Section
- 8: Third Rotary Wing Section
- 9: Exhaust System
- 10: Control Section

## Claims

1. An aerial vehicle, comprising:
a vehicle body extending in a front-rear direction;
a saddle section provided on an upper side of the vehicle body;
a motive power section provided on an underside of the vehicle body, at a position below the saddle section; and
a rotary wing section which is provided at at least one of the front and rear of the motive power section, and which rotates by using the motive power section as a motive power source.

2. The aerial vehicle according to claim 1, wherein:
the rotary wing section is provided in at least one pair at the front and rear of the motive power section; and
the saddle section is provided between a pair of the rotary wing sections in a front-rear direction.

3. The aerial vehicle according to claim 1 or claim 2, wherein:
a motor that rotates the rotary wing section is provided as an accessory in the rotary wing section; and
the motor obtains motive power by means of the motive power source.

4. The aerial vehicle according to any one of claims 1 to 3, wherein:
the motive power section includes a battery that electrically stores the motive power source; and
the battery is provided below the saddle section.

5. The aerial vehicle according to any one of claims 1 to 4, wherein:
the motive power section includes an engine.

6. The aerial vehicle according to claim 5, wherein:
an exhaust system that processes exhaust gas discharged from the engine is provided below the saddle section.

7. The aerial vehicle according to any one of claims 1 to 6, wherein:
the rotary wing section includes:
a lift generating wing section that generates lift for causing the vehicle body to ascend; and
a thrust generating wing section for imparting thrust to the vehicle body.

8. The aerial vehicle according to claim 7, wherein:
the thrust generating wing section is provided adjacent to an outer side in a width direction of the lift generating wing section.
